(19) **Europäisches Patentamt**
**European Patent Office**
**Office européen des brevets**

(11) **EP 2 927 710 B1**

(12) **EUROPEAN PATENT SPECIFICATION**

(45) Date of publication and mention
of the grant of the patent:
**12.06.2019 Bulletin 2019/24**

(51) Int Cl.:
**G01S 17/02** *(2006.01)*     **G01S 17/42** *(2006.01)*
**G01S 17/93** *(2006.01)*     **G01S 11/12** *(2006.01)*

(21) Application number: **15156636.1**

(22) Date of filing: **26.02.2015**

(54) **RANGING SYSTEM, INFORMATION PROCESSING METHOD AND PROGRAM THEREOF**

VERMESSUNGSSYSTEM, INFORMATIONSVERARBEITUNGSVERFAHREN UND PROGRAMM
DAFÜR

SYSTÈME DE MESURE DE DISTANCE, PROCÉDÉ DE TRAITEMENT D'INFORMATIONS ET
PROGRAMME POUR METTRE EN OEUVRE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2014 JP 2014050562**

(43) Date of publication of application:
**07.10.2015 Bulletin 2015/41**

(73) Proprietor: **Ricoh Company, Ltd.
Tokyo 143-8555 (JP)**

(72) Inventors:
• **Guan, Haike
Tokyo, 143-8555 (JP)**
• **Sekiguchi, Hiroyoshi
Tokyo, 143-8555 (JP)**

• **Yokota, Soichiro
Tokyo, 143-8555 (JP)**
• **Suzuki, Shuichi
Kanagawa, 222-8530 (JP)**
• **Nakajima, Mitsuru
Kanagawa, 222-8530 (JP)**

(74) Representative: **SSM Sandmair
Patentanwälte Rechtsanwalt
Partnerschaft mbB
Joseph-Wild-Straße 20
81829 München (DE)**

(56) References cited:
**EP-A1- 2 546 602       EP-A2- 2 669 846
WO-A1-2013/018673     JP-A- 2000 329 852
JP-A- 2004 347 471     US-A1- 2005 152 580**

**Description**

## BACKGROUND OF THE INVENTION

1. Field of the Invention

The disclosures herein generally relate to the field of optical ranging technology.

2. Description of the Related Art

Conventionally, a stereo ranging technology, in which a parallax calculation is performed based on captured images (stereo images) captured by using plural imaging units such as a stereo camera and a distance to a ranging object is calculated, has been known.

Moreover, a method of combining a laser radar ranging technology with the stereo ranging technology and weight-adding distances calculated by using the respective ranging technologies, thereby calculating a distance with high accuracy, has been proposed (see, for example, Japanese Published Patent Application No. 2000-329852 or the like).

However, in the case where a scanning area of the laser radar is an entire capturing area by the imaging units, as disclosed in Japanese Published Patent Application No. 2000-329852, the laser radar is required to scan the entire capturing area within a frame cycle of the imaging unit, and a spatial resolution of the laser radar must be set low.

In this way, in the case of calculate the distance to the ranging object by using the stereo ranging technology combined with the laser radar ranging technology, it is desirable to set a high spatial resolution of the laser radar.

EP 2 669 846 A2 and EP 2 546 602 A1 each disclose a stereo camera device for target recognition and distance determination during driver assistance. JP 2004-347471 discloses a method of determining whether horizontal positions of a preceding running car by a stereo camera and that of the preceding running car by a laser radar are coincident.

JP 2000-329852 discloses an obstacle recognition device having two electronic cameras and a laser range finder.

WO 2013/018673 A1 discloses an object detector for detecting an object in the vicinity of a host vehicle using a camera.

## SUMMARY OF THE INVENTION

The scope of the invention is defined by the appended claims. Any reference to "embodiment(s)", "example(s)" or "aspect(s) of the invention" in this description not falling under the scope of the claims should be interpreted as illustrative example(s) for understanding the invention.

## BRIEF DESCRIPTION OF THE DRAWINGS

Other objects and further features of embodiments will be apparent from the following detailed description when read in conjunction with the accompanying drawings, in which:

Fig. 1 is a diagram illustrating an example of an entire configuration of a ranging system according to a present embodiment;

Figs. 2A and 2B are diagrams illustrating an example of an arrangement of an imaging unit and a laser radar ranging unit, a capturing area by the imaging unit, and an area that can be scanned with a laser light by the laser radar ranging unit according to the present embodiment;

Fig. 3 is a diagram illustrating an example of a hardware configuration of the imaging unit according to the present embodiment;

Fig. 4 is a diagram illustrating an example of a hardware configuration of the laser radar ranging unit according to the present embodiment;

Fig. 5 is a diagram illustrating a schematic example of a hardware configuration for changing an emitting direction of the laser light according to the present embodiment;

Fig. 6 is a diagram illustrating an example of a hardware configuration of an information processing apparatus according to the present embodiment;

Fig. 7 is a diagram illustrating a functional configuration of the information processing apparatus according to the present embodiment;

Fig. 8 is a diagram illustrating an example of captured images (stereo images) according to the present embodiment;

Fig. 9 is a diagram illustrating an example of a functional configuration of a region specification unit according to the present embodiment;

Fig. 10 is a diagram illustrating an example of a segmentation of the captured image by a block segmentation unit according to the present embodiment;

Fig. 11 is a diagram illustrating an example of a specific region for specifying a scanning area of the laser light according to the present embodiment;

Fig. 12 is a diagram illustrating an example of laser distance information retained by a laser distance information acquisition unit according to the present embodiment;

Fig. 13 is a flowchart illustrating an example of a flow of ranging information generation processing in the ranging system according to the present embodiment; and

Fig. 14 is a diagram illustrating an example of ranging information according to the present embodiment.

## DESCRIPTION OF THE PREFERRED EMBODIMENTS

In the following, embodiments of the present invention will be described with reference to the accompanying drawings. Meanwhile, in the specification and the drawings, the same reference symbol is assigned to elements having essentially the same functional configuration, and a duplicated explanation will be omitted.

[First embodiment]

<1. Entire configuration of ranging system>

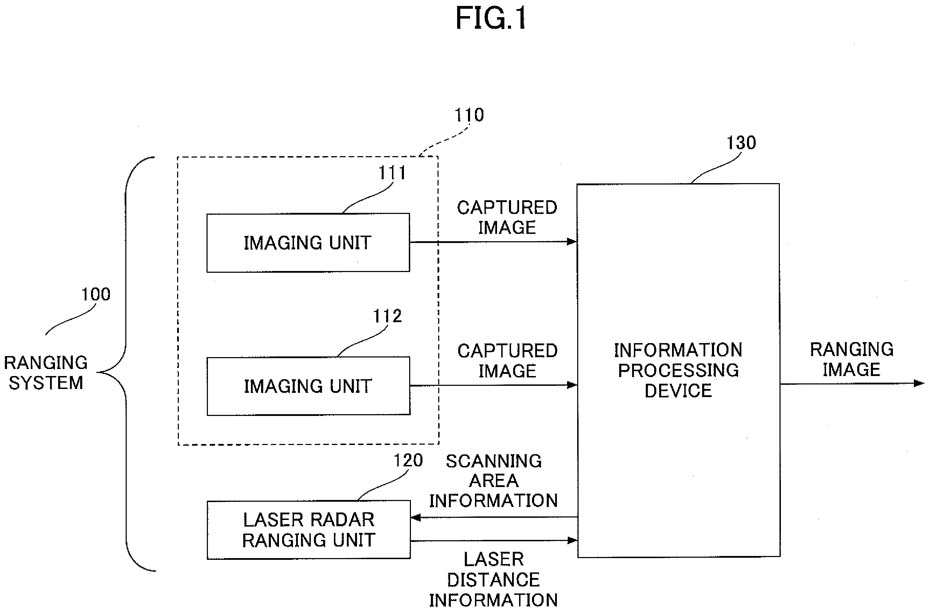

First, an entire configuration of a ranging system according to the present embodiment will be explained. Fig. 1 is a diagram illustrating the entire configuration of the ranging system according to the present embodiment. As shown in Fig. 1, the ranging system 100 includes a stereo imaging unit 110, a laser radar ranging unit 120 and an information processing device 130.

The stereo imaging unit 110 includes a monocular imaging unit 111 and a monocular imaging unit 112. The imaging units 111 and 112 perform capturing in predetermined frame cycles, respectively, and send captured images, on which a ranging object is projected, to the information processing device 130.

The laser radar ranging unit 120 calculates a distance to a ranging object by emitting pulsed laser light and receiving a reflected light from the ranging object which is irradiated with the laser light. The laser radar ranging unit 120 determines a scanning area to be scanned with laser light based on scanning area information sent from the information processing device 130. Moreover, the laser radar ranging unit 120 measures (calculates) the distance to the ranging object by emitting laser light within the determined scanning area, and sends the distance to the information processing device 130 as laser distance information.

The information processing device 130 performs a parallax calculation for the captured image sent from the stereo imaging unit 110 and measures (calculates) a distance to the ranging object for each pixel, thereby generates parallax calculation distance information. Moreover, the information processing device 130 generates the scanning area information based on the captured image sent from the stereo imaging unit 110, and sends it to the laser radar ranging unit 120. Furthermore, the information processing device 130 generates ranging information from the generated parallax calculation distance information and the laser distance information sent from the laser radar ranging unit 120.

<2. Arrangement of imaging unit and laser radar ranging unit>

Next, an example of arrangement of the ranging units 111, 112 and the laser radar ranging unit 120 in the case where the ranging system 100 is applied for vehicle will be explained. Furthermore, the capturing area of the imaging units 111, 112 and the area that can be scanned with a laser light by the laser radar ranging unit 120 will be explained.

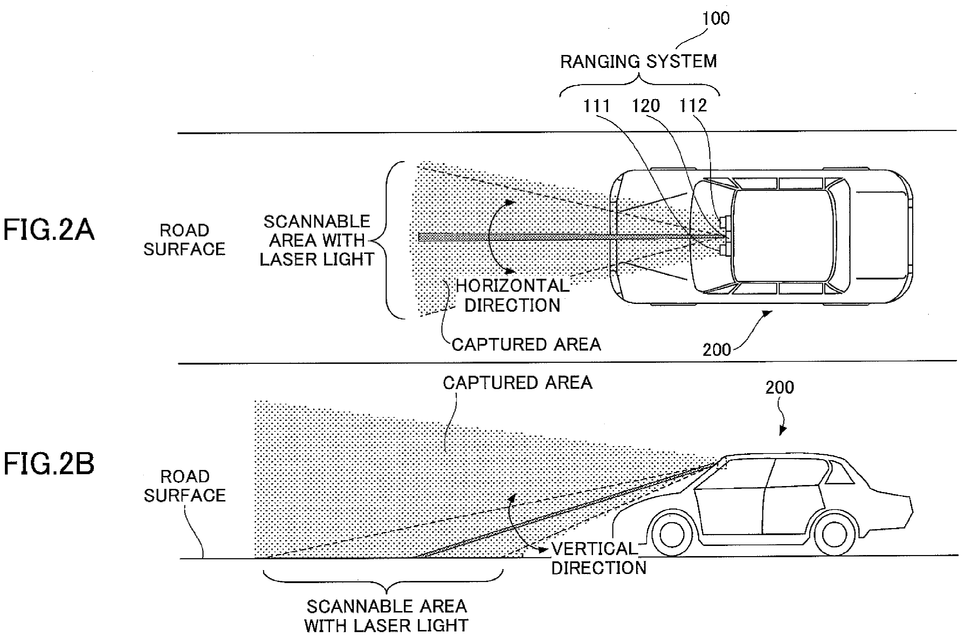

Figs. 2A and 2B are diagrams illustrating an example of the arrangement of the imaging units 111, 112 and the laser radar ranging unit 120, the capturing area by the imaging units 111, 112, and the area that can be scanned with the laser light by the laser radar ranging unit 120 in the case where the ranging system 100 is applied for vehicle.

As shown in Figs. 2A and 2B, the imaging units 111, 112 and the laser radar ranging unit 120 are attached in the vicinity of a front windscreen on a ceiling inside a vehicle 200 and at a central position in a width direction of the vehicle 200.

At the attached position, the imaging units 111, 112 perform capturing ahead in the travelling direction of the vehicle 200. Moreover, the laser radar ranging unit 120 emits laser light ahead in the travelling direction of the vehicle 200.

In Figs. 2A and 2B, shaded regions represent the capturing areas where the imaging units 111, 112 capture. Moreover, dashed lines show the area that can be scanned with the laser light by the laser radar ranging unit 120.

As shown in Fig. 2A, the laser radar ranging unit 120 can change the direction of emitting the laser light horizontally by changing a turning angle. That is, the laser radar ranging unit 120 can scan horizontally the ranging object (a road surface in the example in Fig. 2A) with the laser light.

Moreover, as shown in Fig. 2B, the laser radar ranging unit 120 can change the direction of emitting the laser light vertically by changing an elevation angle. That is, the laser radar ranging unit 120 can scan vertically the ranging object (a road surface in the example in Fig. 2B) with the laser light.

Meanwhile, the laser radar ranging unit 120 is assumed to be configured so that the area that can be scanned with the laser light horizontally and vertically almost coincides with the capturing area by the imaging units 111, 112. However, the laser radar ranging unit 120 is controlled to scan only a part of the scannable area based on the scanning area information sent from the information processing device 130. Thus, the laser radar ranging unit 120 can measure the distance to the ranging object with a high spatial resolution.

<3. Hardware configuration of imaging unit>

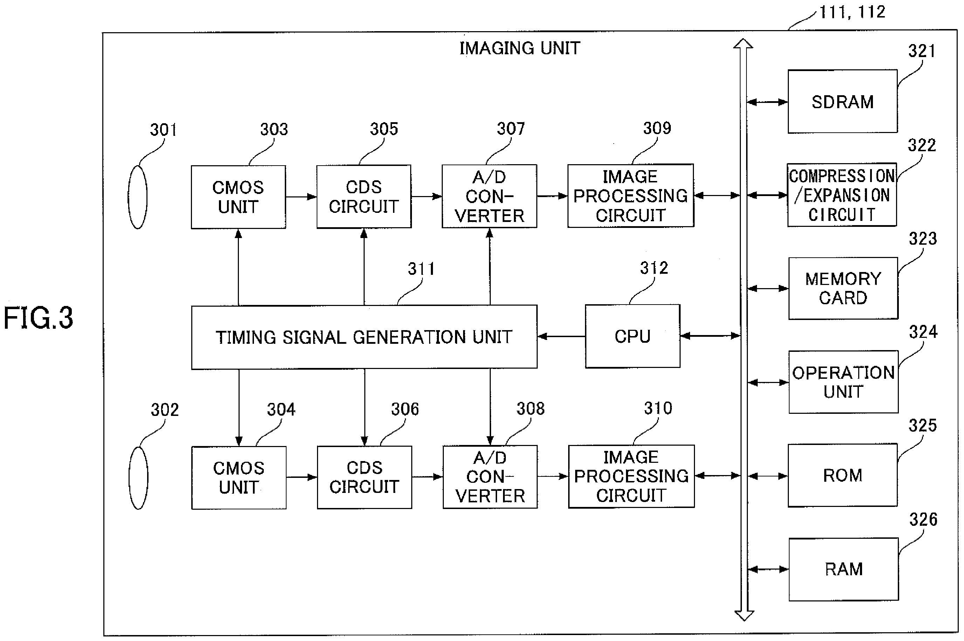

Next, a hardware configuration of the imaging unit 111, 112 will be explained. Fig. 3 is a diagram illustrating the hardware configuration of the imaging units 111 and 112.

As shown in Fig. 3, a light from the ranging object enters CMOS (Complementally Metal Oxide Semiconductor) units 303, 304 via an optical system 301 of the imaging unit 111 and an optical system 302 of the imaging unit 112, respectively.

The CMOS units 303, 304 convert formed optical images into electric signals, and output analog image data. Noise components in the image data output from the CMOS units 303, 304 are removed by CDS (Correlated Double Sampling) circuits 305, 306. Furthermore, the image data are converted into digital signals by A/D (analog-to-digital) convertors 307, 308, and are output to the image processing circuits 309, 310.

The image processing circuits 309, 310 perform various image processing by using a SDRAM (Synchronous Dynamic Random Access Memory) 321 which stores image data temporarily. Meanwhile, the various image processing includes, for example, YCrCb conversion processing, white balance processing, contrast correction processing, edge enhancement processing, color conversion processing or the like.

The white balance processing adjusts color density (brightness value) of the image data. The contrast correction processing adjusts contrast of the image data. Moreover, the edge enhancement processing adjusts sharpness of the image data. The color conversion processing adjusts tone of the image data.

The image data, for which the various image processing has been performed, are stored in a memory card 323 via a compression/expansion circuit 322. The compression/expansion circuit 322 compresses the image data for which the various image processing has been performed and stores them in the memory cart 323. Furthermore, the compression/expansion circuit expands image data read from the memory cart 323 and outputs them to the image processing circuits 309, 310.

The CPU (Central processing unit) 312 controls operation timings of the CMOS units 303, 304, the CDS circuits 305, 306 and the A/D converters 307, 308 via a timing signal generation unit 311 which generates timing signals. Moreover, the CPU 312 controls the image processing circuits 309, 310, the compression/expansion circuit 322 and the memory card 323.

Meanwhile, the CPU 312 starts based on a start instruction input via an operation unit 324, and performs various arithmetic processing according to programs stored in a ROM (Read-Only Memory) 325. A RAM (Random Access Memory) 326 functions as a work area upon the CPU 312 performing the various arithmetic processing. Meanwhile, the CPU 312, the ROM 325 and the RAM 326 are connected with each other via a bus line.

<4. Configuration of laser radar ranging unit>

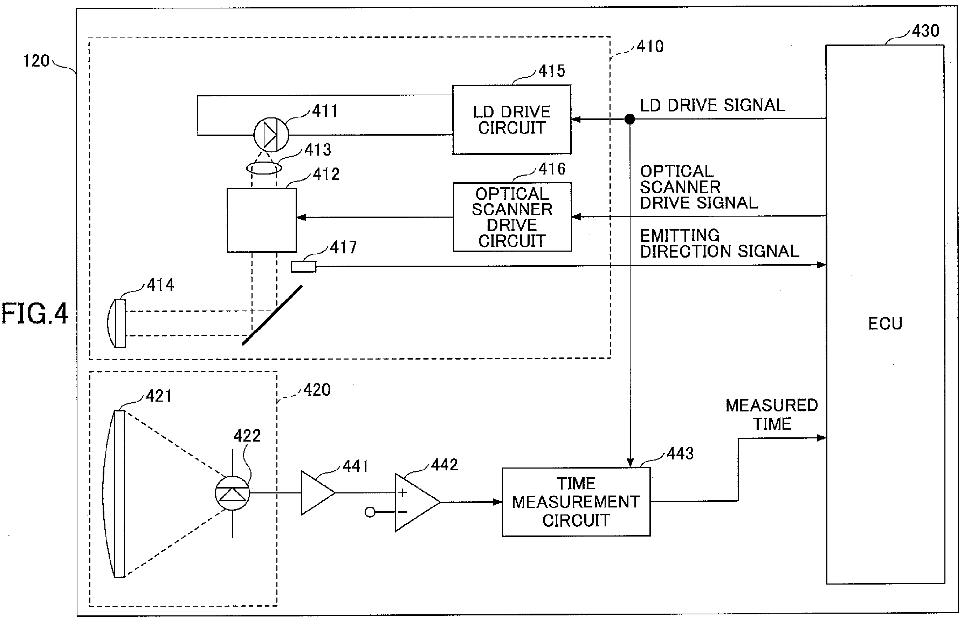

Next, a hardware configuration of the laser radar ranging unit 120 will be explained. Fig. 4 is a diagram illustrating the hardware configuration of the laser radar ranging unit 120.

As shown in Fig. 4, the laser radar ranging unit 120 includes a light transmission unit 410, a light reception unit 420 and an ECU (Electronic Control Unit) 430, which functions as a control unit.

The light transmission unit 410 includes a semiconductor laser diode (LD) 411, which emits pulsed laser light, and an optical scanner 412. Moreover, the light transmission unit 410 includes an input optical system 413 for guiding light from the LD 411 to the optical scanner 412, and an output optical system 414 for emitting the laser light, which passes through the optical scanner 412.

The LD 411 is connected to the ECU 430 via a LD drive circuit 415, and emits laser light according to a drive signal from the ECU 430.

The optical scanner 412 is connected to the ECU 430 via an optical scanner drive circuit 416. The optical scanner 412 scans repeatedly by emitting the pulsed laser light emitted from the LD 411 in a predetermined cycle while changing the emitting direction horizontally and vertically.

The emitting direction (turning angle and elevation angle) of the laser light at the optical scanner 412 is detected by an emitting direction monitor 417. The detected direction is output to the ECU 430 as an emitting direction signal, and fed back to an optical scanner drive signal. Thus, the ECU 430 controls the emitting direction and a frequency for the repeated scan. Meanwhile, a target value of the emitting direction of the laser light is calculated by the ECU 430 based on the scanning area information sent from the information processing apparatus 130.

The light reception unit 420 includes a light reception lens 421 and a light reception element 422. Laser light reflected at a ranging object in front of the vehicle is received by the light reception element 422 via the light reception lens 421, a mirror element (not shown) and the like.

The light reception element 422 is formed of a photodiode or the like, and outputs an electric signal having a voltage corresponding to a light intensity of the reflected laser light. The electric signal output by the light reception element 422 is amplified by an amplifier 441 and output to a comparator 442.

The comparator 442 compares a value of an output voltage from the amplifier 441 with a reference voltage V0, and outputs a predetermined light reception signal to a time measuring circuit 443 in the case where the output voltage is greater than V0.

To the time measurement circuit 443, a drive signal output from the ECU 430 to the LD drive circuit 415 is also input. The time measurement circuit 443 outputs a time from outputting the LD drive signal until the predetermined light reception signal occurring. That is, a time difference between a time when the laser light is emitted and a time when the reflected laser light is received is output to the ECU 430 as measured time data. The ECU 430 measures (calculates) the distance to the ranging object based on the measured time data.

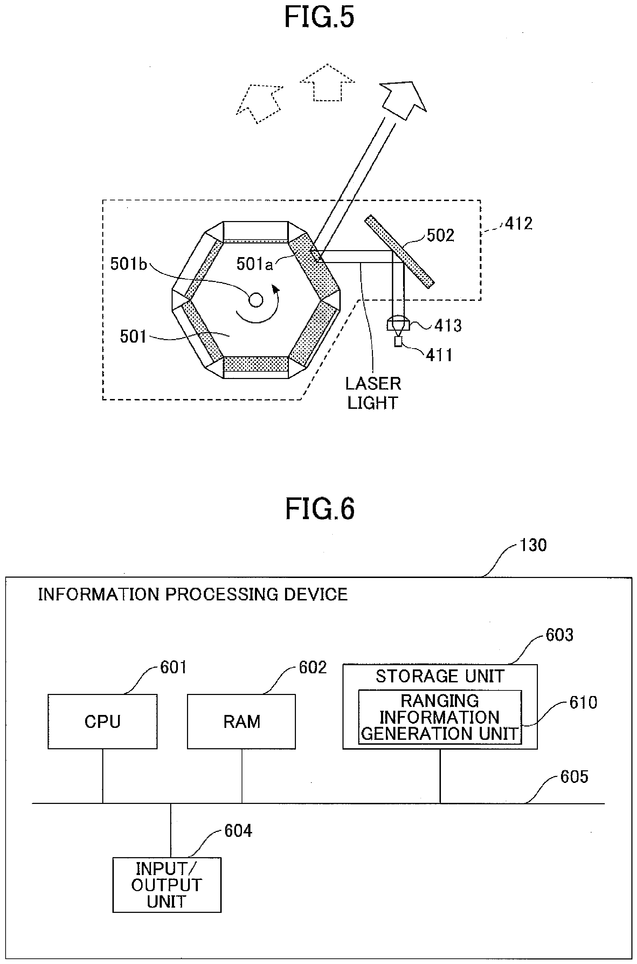

Fig. 5 is a diagram for explaining a configuration of the optical scanner 412 for repeatedly scanning horizontally with laser light. As shown in Fig. 5, in order to repeatedly scan horizontally with the laser light, the laser radar ranging unit 120 includes a scanning mirror 501 such as a polygon mirror arranged in the vicinity of the LD 411 and the input optical system 413.

The laser light emitted from the LD 411 is reflected by a mirror 502 via the input optical system 413, and emitted to the mirror surface 501a of the scanning mirror 501. The scanning mirror 501 rotates around a rotation axis 501b. The laser light emitted to the mirror surface 501a is reflected, and emitted while changing horizontally the emitting direction within the scanning area. Meanwhile, the scanning area can be moved horizontally by changing the reflection angle of the mirror 502.

That is, by the scanning mirror 501 rotating, the repeated scanning can be performed within the predetermined scanning area with laser light. Moreover, by changing the reflection angle of the mirror 502 based on the scanning area information, the scanning area can be moved horizontally.

Whereas, Fig. 5 illustrates an example of a mechanism for repeatedly scanning a predetermined scanning area horizontally. However, this mechanism can be applied to a mechanism for repeatedly scanning a predetermined scanning area vertically (i.e. while changing an elevation angle).

<5. Configuration of information processing device>

Next, a hardware configuration of the information processing device 130 will be explained. Fig. 6 is a diagram illustrating the hardware configuration of the information processing device according to the present embodiment.

As shown in Fig. 6, the information processing device 130 include a CPU (Central processing unit) 601, a RAM (Random Access Memory) 602, a storage unit 603 and an input/output unit 604. Meanwhile, the respective elements of the information processing device 130 are connected with each other via a bus 605.

The CPU 601 executes a program stored in the storage unit 603 (program functioning as a ranging information generation unit 610).

The RAM 602 is a main storage device such as a DRAM (Dynamic Random Access Memory) or a SRAM (Static Random Access Memory). The RAM 602 functions as a work area which is developed upon the program stored in the storage unit 603 being executed by the CPU 601.

The storage unit 603 is a memory such as an EPROM (Erasable Programmable Read-Only Memory) or an EEPROM (Electrically Erasable Programmable Read-Only Memory), and stores the program that causes the CPU 601 to function as the ranging information generation unit 610.

The input/output unit 604 is an interface unit for communicating with the stereo imaging unit 110 (imaging units 111, 112) or the laser radar ranging unit 120.

<6. Functional configuration of information processing device>

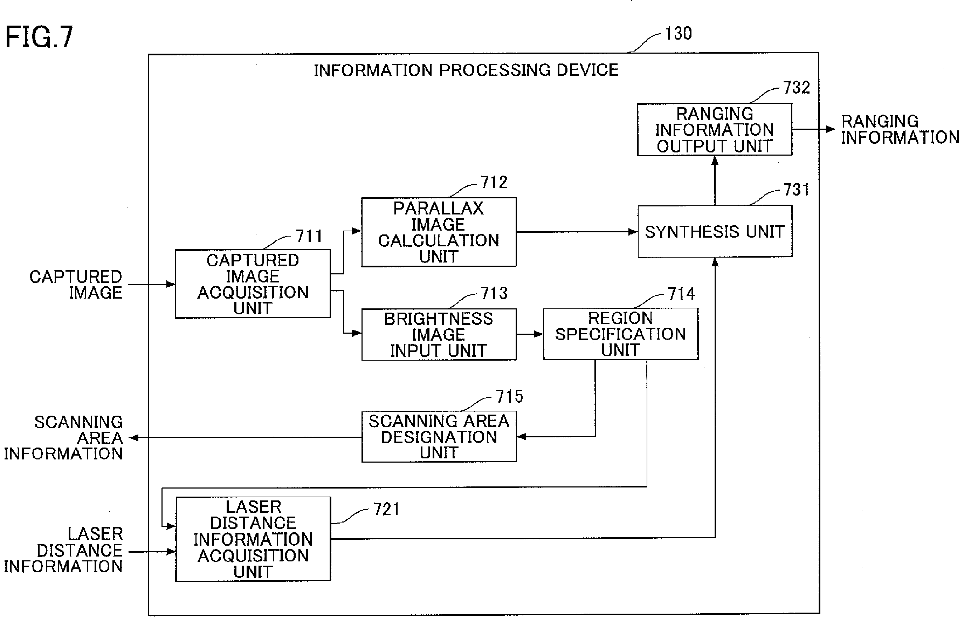

Next, various functions that the information processing device 130 realizes by the CPU 601 executing the program for functioning as the ranging information generation unit 610 will be explained. Fig. 7 is a diagram illustrating a functional configuration of the information processing device 130.

As shown in Fig. 7, the function realized by the information processing device 139 includes a captured image acquisition unit 711, a parallax image calculation unit 712, a brightness image input unit 713, a region specification unit 714, a scanning area designation unit 715, a laser distance information acquisition unit 721, a synthesis unit 731 and a ranging information output unit 732.

The captured image acquisition unit 711 acquires a captured image in a predetermined frame cycle from the imaging units 111, 112.

The parallax image calculation unit 712 performs a parallax calculation based on the captured image acquired by the captured image acquisition unit 711, and measures (calculates) a distance to the ranging object for each pixel included in the captured image. Moreover, the distances to the ranging object calculated for the respective pixels are output to the synthesis unit 731 as parallax calculation distance information. Details of the processing in the parallax image calculation unit 712 will be described later.

The brightness image input unit specifies information on a position of each of the pixels included in the captured image acquired by the captured image acquisition unit 711 and information on a brightness value of each of the pixels.

The region specification unit 714 extracts a specific region from a region included in the captured image by determining whether the information on the position of each of the pixels and the information on the brightness value of each of the pixels, which are specified by the brightness image input unit 713, satisfy a predetermined condition. The specific region is a region in the captured image used for the parallax calculation, in which due to its low contrast it is difficult to acquire distance information with high accuracy by the parallax calculation. Details of the processing of the region specification unit 714 will be described later.

The scanning area designation unit 715 calculates a scanning area for scanning with laser light corresponding to the specific region extracted by the region specification unit 714. Moreover, the scanning area designation unit 715 sends the calculated scanning area scanned with laser light to the laser radar ranging unit 120 as scanning area information.

The laser distance information acquisition unit 721 acquires laser distance information that the laser radar ranging unit 120 obtains by scanning with laser light based on the scanning area information sent from the scanning area designation unit 715. The laser distance information is associated with the respective pixels in the specific region extracted by the region specification unit 714. The laser distance information acquisition unit 721 outputs the laser distance information associated with the respective pixels in the specific region to the synthesis unit 731.

The synthesis unit 731 combines the parallax calculation distance information output from the parallax image calculation unit 712 and the laser distance information output from the laser distance information acquisition unit 721, and generates ranging information. Moreover, the synthesis unit 731 outputs the generated ranging information to the ranging information output unit 732. Meanwhile, details of the processing of the synthesis unit 731 will be described later.

The ranging information output unit 732 outputs the ranging information output from the synthesis unit 731 to an external device (not shown).

<7. Details of each function of information processing device>

Next, the processing of each of the units in the information processing device 130 will be explained in detail.

<7.1 processing of parallax image calculation unit>

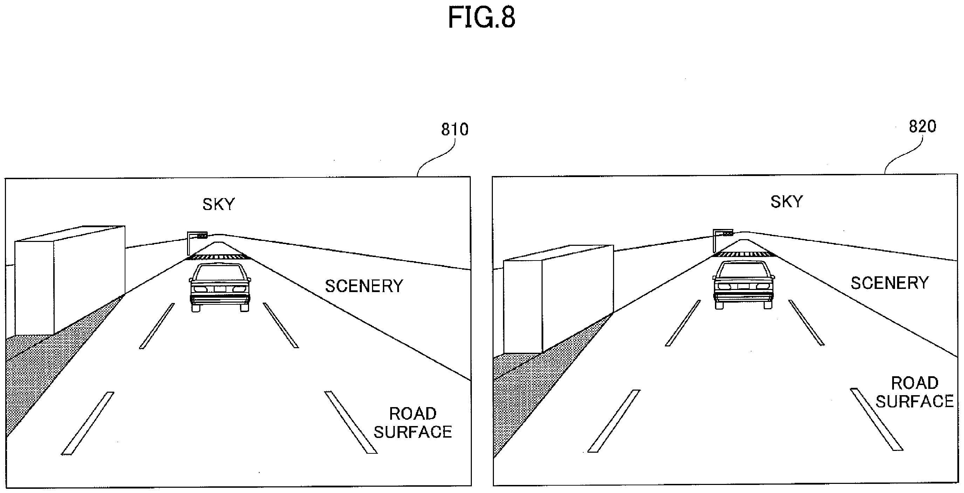

First, details of the processing by the parallax image calculation unit 712 will be explained with reference to Fig. 8. Fig. 8 is a diagram illustrating an example of the captured images. A left part of Fig. 8 illustrates an example of a captured image (comparison image) captured by the imaging unit 111, and a right part of Fig. 8 illustrates an example of a captured image (reference image) captured by the imaging unit 112.

As shown in Fig. 8, in the case of extracting parts where the same ranging object is drawn from a pair of the captured images 810, 820 captured by the imaging units 111, 112, respectively, positions where the same ranging object is drawn are shifted horizontally from each other. This is because the imaging units 111 and 112 are arranged so as to be separated horizontally by a predetermined distance.

Then, the parallax image calculation unit 712 extracts the same point in the same ranging object by shifting the captured image 810, which is the comparison image, to the captured image 820, which is the reference image, in the horizontal direction pixel by pixel, and obtaining a position which maximizes an overlapping part (position of the greatest similarity). Furthermore, the parallax image calculation unit 712 calculates a shift amount (parallax) between the same points extracted as above, and calculates a distance to the same point according to the principle of the triangulation method by using the calculated parallax and the known distance between optical axes of the imaging units 111, 112.

The parallax image calculation unit 712, calculates the distance Z to the same point in the same ranging object according to the following formula.

[Formula 1]

$$Z = B \cdot f / n \cdot d \qquad \ldots\ldots \text{(equation 1)}$$

where n is a number of shifted pixels, f is focal length of a lens of the imaging units 111, 112, B is a base line length (distance between optical axes of imaging units) and d is a pixel pitch.

<7.2 Processing of region specification unit>

Next, the function of the region specification unit 714 will be explained. As described above, the region specification unit 714 extracts, as the specific region, a region in the captured image used for the parallax calculation in which a contrast is low and it is difficult to acquire distance information with high accuracy by the parallax calculation.

Here, in the present embodiment, the region extracted as the specific region is assumed to be a part of a road surface for which especially accurate distance information is required. Furthermore, as the state of low contrast on the road surface, a state where the road surface is covered with snow and a state where a shadow appears on the road surface will be considered.

Generally, in the case of capturing a road surface covered with snow, a region with high brightness value and low contrast is drawn in a lower part of a captured image. Moreover, in the case of capturing a road surface on which a shadow appears, a region with low brightness value and low contrast is drawn in the lower part of the captured image.

Thus, in the present embodiment, the region specification unit 714 extracts a specific region (a region in which a road surface covered with snow is drawn and a region in which a road surface where a shadow appears is drawn) by using information on a brightness value and information on a position.

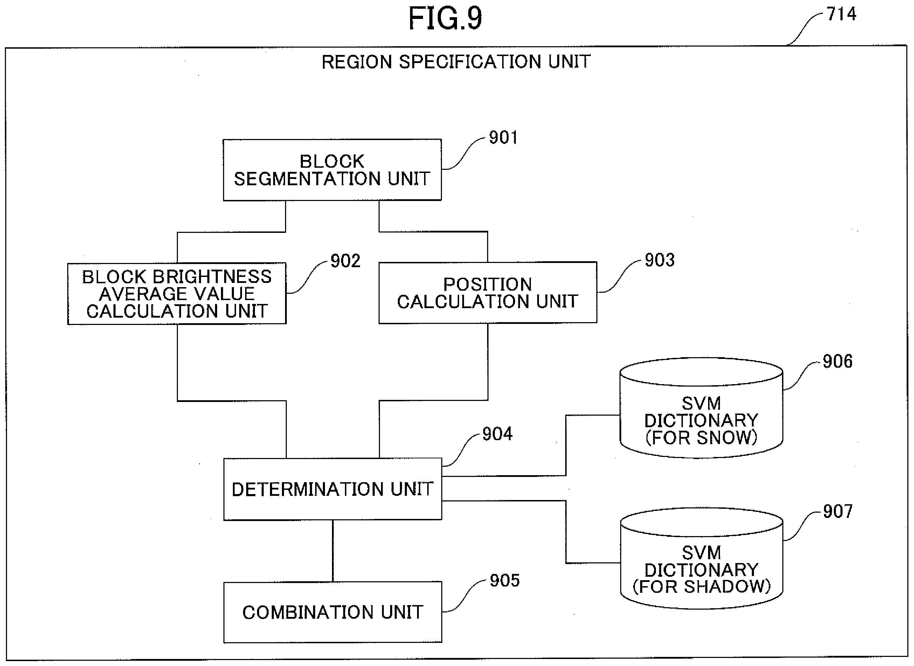

Fig. 9 is a diagram illustrating a functional configuration of the region specification unit that extracts a specific region by using the information on a brightness value and the information on a position. As shown in Fig. 9, the region specification unit 714 includes a block segmentation unit 901, a block brightness average value calculation unit 902, a position calculation unit 903, a determination unit 904 and a combination unit 905. Furthermore, the region specification unit 714 includes an SVM (Support Vector Machine) dictionary (for snow) 906 and an SVM dictionary (for shadows) 907.

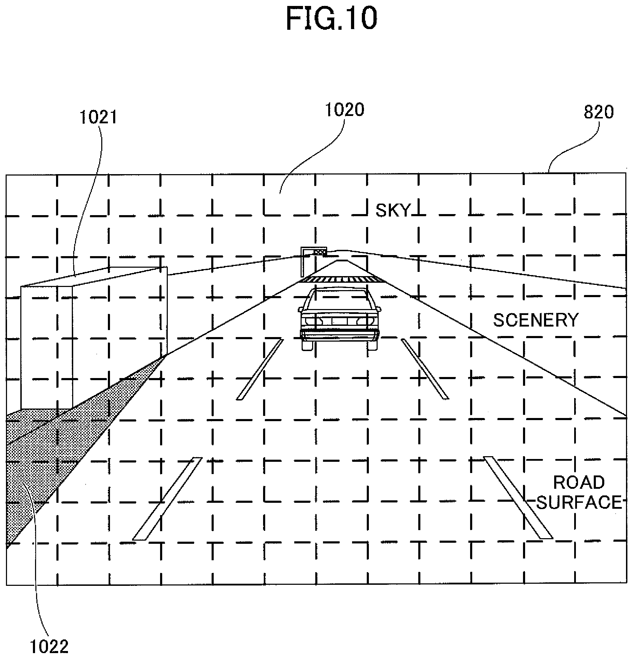

The block segmentation unit 901 divides the captured image 902 which is a reference image into blocks with a predetermined size. Fig. 10 illustrates an example of the captured image 820, which is a reference image, divided into blocks with a predetermined size (see, for example, a block 1020). Meanwhile, in the case of the captured image 820 shown in Fig. 10, a building 1021 on the road side and a road surface 1022 in which a shadow appears by the building are drawn.

The block brightness average value calculation unit 902 calculates an average value (I) of brightness values of respective pixels included in a block for each divided block.

The position calculation unit 903 calculates positions of the divided blocks (coordinates (x, y) in the captured image 820).

The determination unit 904 determines whether it is a block showing a road surface covered with snow based on the average value (I) of brightness values calculated by the block brightness average value calculation unit 902 and the block coordinates (x, y) calculated by the position calculation unit 903 using a SVM mechanical learning method.

Specifically, it is determined by assigning the average value (I) of brightness values and the block coordinates (x, y) of a block of a determination object to an evaluation formula (equation 2), which is obtained by analyzing a sample image (image obtained by capturing a road surface covered with snow) stored in the SVM dictionary (for snow) 906.
[Formula 2]

$$F_1(I, x, y) = f_{11} \times I + f_{12} \times x + f_{13} \times y \ \ldots \text{(equation 2)}$$

where $f_{11}$, $f_{12}$, $f_{13}$ are parameters obtained by analyzing the sample image (image obtained by capturing a road surface covered with snow) stored in the SVM dictionary (for snow) 906.

The determination unit 904 determines whether $F_1(I,x,y)$, which is obtained by assigning the average value (I) of brightness values and the block coordinates (x, y) to equation 2 for the block of the determination object, is within a predetermined threshold. In the case where it is within the predetermined threshold, it is determined that the block of the determination object shows a road surface covered with snow.

Similarly, the determination unit 904 determines whether it is a block showing a road surface in which a shadow appears based on the average value (I) of brightness values and the coordinates (x, y) using the SVM mechanical learning method.

Specifically, it is determined by assigning the average value (I) of brightness values and the block coordinates (x, y) to an evaluation formula (equation 3), which is obtained by analyzing a sample image (image obtained by capturing a road surface in which a shadow appears) stored in the SVM dictionary (for shadows) 907.

[Formula 3]

$$F_2(I, x, y) = f_{21} \times I + f_{22} \times x + f_{23} \times y \ldots (\text{equation } 3)$$

where $f_{21}$, $f_{22}$, $f_{23}$ are parameters obtained by analyzing the sample image (image obtained by capturing a road surface in which a shadow appears) stored in the SVM dictionary (for shadows) 907.

The determination unit 904 determines whether $F_2(I,x,y)$, which is obtained by assigning the average value (I) of brightness values and the block coordinates (x, y) to equation 3 for the block of the determination object, is within a predetermined threshold. In the case where it is within the predetermined threshold, it is determined that the block of the determination object shows a road surface in which a shadow appears.

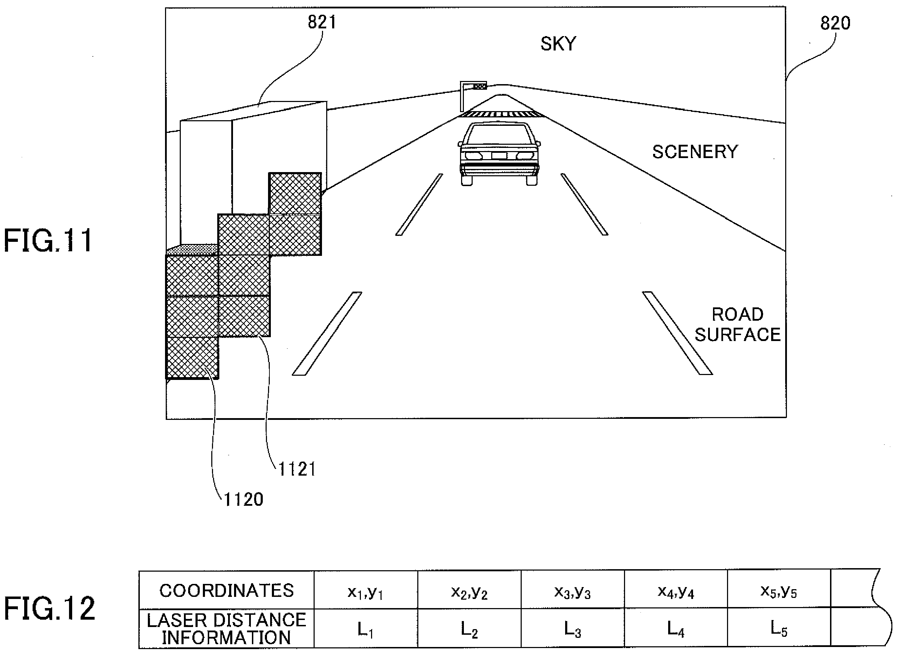

In Fig. 11, among the respective blocks in the captured image 820, a block 1120 is determined to be a block showing a road surface, in which a shadow appears, by the determination unit 904.

In the case where the determination unit 904 determines that it is a block showing a road surface covered with snow, the combination unit 905 combines an adjacent block, which is also determined to be a block showing a road surface covered with snow, as the same block group and generates a specific region. Similarly, in the case where the determination unit 904 determines that it is a block showing a road surface in which a shadow appears, the combination unit 905 combines an adjacent block, which is also determined to be a block showing a road surface in which a shadow appears, as the same block group and generates a specific region. Fig. 11 illustrates an example where a specific region 1121 is generated.

The combination unit 905 outputs the generated specific region 1121 to the scanning area designation unit 715. Moreover, the combination unit 905 identifies coordinates of the respective pixels included in the generated specific region 1121 and outputs them to the laser distance information acquisition unit 721.

<7.3 Processing of scanning area designation unit and laser distance information acquisition unit>

Next, the processing of the scanning area designation unit 715 and of the laser distance information acquisition unit 721 will be explained. The scanning area designation unit 715 determines a scanning area for scanning with laser light based on the specific region 1121 output from the region specification unit 714. Moreover, the scanning area designation unit 715 sends the determined scanning area for scanning with laser light to the laser radar ranging unit 120 as scanning area information.

The laser distance information acquisition unit 721 restricts the scanning area based on the scanning area information, acquires laser distance information calculated by the laser radar ranging unit 120 based on reflection light of laser light emitted correspondingly to the respective pixels in the specific region, and retains it.

Fig. 12 is a diagram illustrating an example of the laser distance information retained by the laser distance information acquisition unit 721. As shown in Fig. 12, the laser distance information acquisition unit 721 retains coordinates of each pixel in the specific region 1121 output from the region specification unit 714 and laser distance information acquired from the laser radar ranging unit 120 associated with each other.

<8. Flow of ranging information generation process in ranging system>

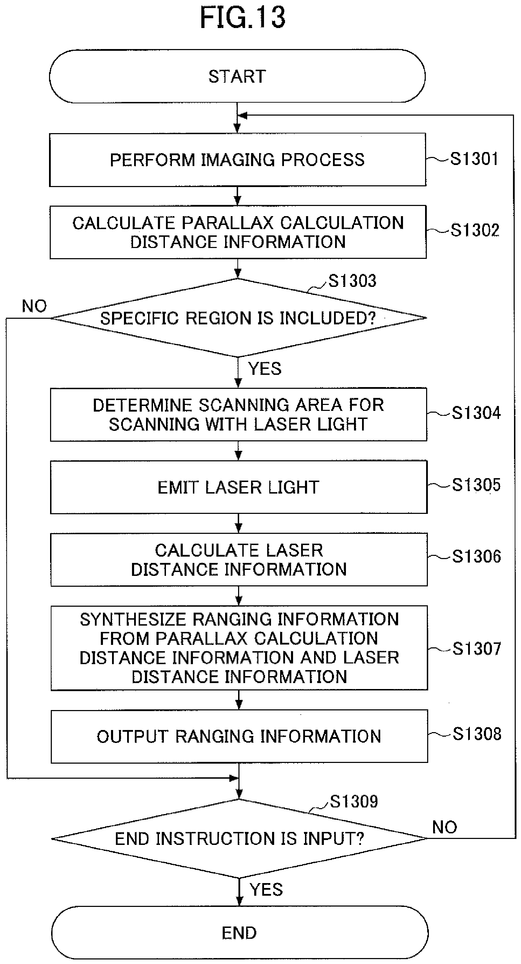

Next, the flow of the ranging information generation process in the ranging system 100 will be explained. Fig. 13 is a flowchart illustrating the flow of the ranging information generation process in the ranging system 100.

First, the stereo imaging unit 110 performs an imaging process and images a captured image of one frame (step S1301).

Next, the information processing device 130 performs a parallax calculation for the captured image of one frame imaged at step S1301, and calculates parallax calculation distance information (step S1302).

Then, the information processing device 130 determines whether a specific region is included in the captured image of one frame imaged at step S1301 (step S1303). In the case where it is determined that a specific region is not included (step S1303: NO), the process proceeds to step S1309.

On the other hand, in the case it is determined that a specific region is included (step S1303: YES), the process proceeds to step S1304. At step S1304, the laser radar ranging unit 120 determines a scanning area for scanning with laser light based on the specific region.

Next, the laser radar ranging unit 120 performs laser emission processing for scanning the scanning area determined at step S1304 with pulsed laser which is emitted so as to correspond to the respective pixels in the specific region (step S1305). Then, the laser radar ranging unit 120 calculates laser distance information for the respective pixels included in the specific region based on a result of the laser emission processing at step S1305 (step S1306).

The information processing device 130 combines the parallax calculation distance information calculated at step S1302 and the laser distance information calculated at step S1306, and generates ranging information (step S1307).

The information processing device 130 outputs the ranging information generated at step S1307 to an external device (step S1308).

Then, the information processing device 130 determines whether an end instruction of the ranging information generation process is input (step S1309). In the case where it is determined that the end instruction is not input (step S1309: NO), the process returns to step S1301, and the stereo imaging unit 110 performs the imaging process for the next frame.

On the other hand, in the case where it is determined that the end instruction is input (step S1309: YES), the ranging information generation process by the ranging system 100 ends.

<9. Example>

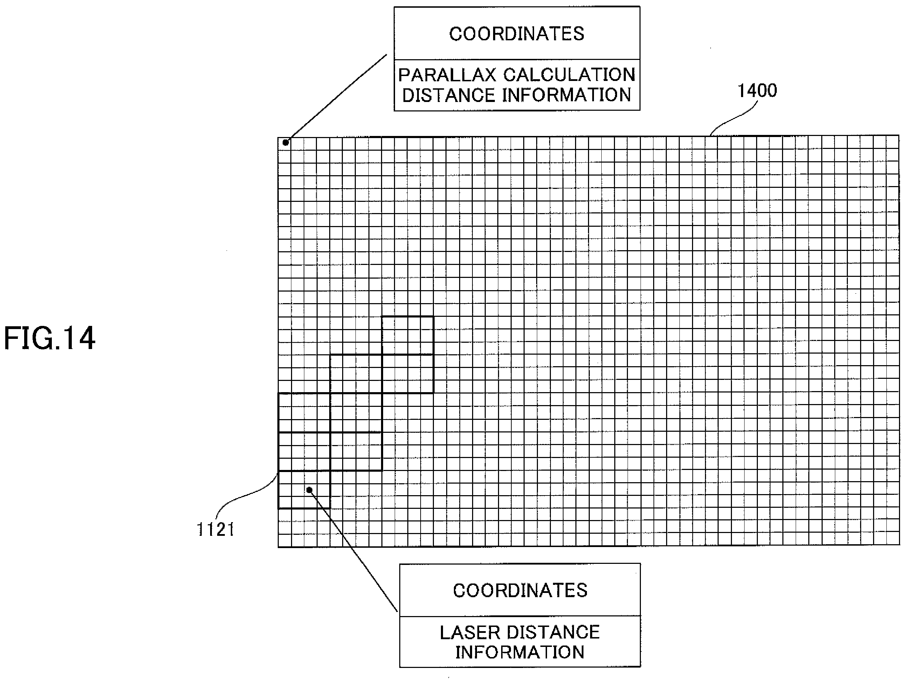

Next, ranging information generated by the ranging system 100 performing the ranging information generation process will be explained. Fig. 14 is a diagram illustrating an example of the ranging information.

As shown in Fig. 14, in the ranging information 1400, coordinates and distance information indicating a distance to a ranging object are stored for each of the pixels included in the captured image 820 (reference image).

In the ranging information 1400, for each of the pixels in a region other than the specific region, parallax calculation distance information is stored as the distance information. On the other hand, for each of the pixels in the specific region, laser distance information is stored as the distance information.

<10. Summary>

As can be seen from the above explanations, the ranging system 100 according to the present embodiment has the following features:

1. As a region, in which it is difficult to acquire distance information with high accuracy by the parallax calculation, a road surface covered with snow and a road surface in which a shadow appears are considered.

2. In order to extract a region showing the above road surfaces as a specific region among regions in a captured image, the captured image is divided into plural blocks, and information on a brightness value and information on a position are calculated for each block.

3. A block showing a road surface covered with snow is determined and a block showing a road surface in which a shadow appears is determined using the information on the brightness value and the information on the position, thereby the specific region is extracted.

4. A scanning area for scanning with laser light is restricted to the extracted specific region.

5. A ranging information is generated by combining parallax calculation distance information calculated for the respective pixels based on the captured image and laser distance information calculated for the respective pixels included in the specific region of the captured image.

Thus, according to the ranging system 100 of the present embodiment, laser distance information can be acquired with high spatial resolution, As a result, ranging information with high spatial resolution can be generated.

[Example]

In the first embodiment, described as above, the region specification unit 714 extracts a specific region by using information on a position of each pixel and information on a brightness value of each pixel output from the brightness image input unit 713. However, the present invention is not limited to this. For example, among specific regions extracted by using the information on a position and the information on a brightness value for each pixel, a pixel, for which the parallax image calculation unit 712 cannot perform the parallax calculation, may be extracted as a specific region.

Moreover, in the above-described first embodiment, distance information is calculated based on reflection light in the case where the laser radar ranging unit 120 emits laser light. However, the present invention is not limited to this. The distance information may be calculated based on reflection light in the case where an electromagnetic wave ranging unit other than the laser radar ranging unit emits an electromagnetic wave.

**Claims**

1. A ranging system (100) for measuring a distance to an object imaged on a captured image, comprising:

   a stereo imaging unit (110) configured to image captured images;
   an information processing device (130) configured to calculate parallax calculation distance information by performing a parallax calculation for the captured images, said ranging system (100) being **characterized in that**:

   the information processing device (130) is further configured to determine whether a specific region is included in the captured image, and
   to determine, if the information processing device (130) determines that the specific region is included in the captured image, a scanning area for scanning with laser light based on the specific region;

   and **in that** it further comprises: a laser radar ranging unit (120) configured to calculate laser distance information based on a laser light reflected corresponding to the respective pixels of the captured image by scanning laser light within the scanning area,
   wherein the information processing device (130) is configured to generate ranging information by combining the parallax calculation distance information and the laser distance information.

2. The ranging system as claimed in claim 1, wherein the information processing device (130) is configured to combine the laser distance information for each of the pixels in the specific region and the parallax calculation distance information for each of the pixels in a region other than the specific region.

3. An information processing method for measuring a distance to an object imaged on a captured image, comprising:

   performing (S1303) an imaging process and imaging a captured image;
   performing a parallax calculation for the captured image and calculating (S1302) parallax calculation distance information;
   said information processing method being **characterized in that** it further comprises the steps of:

   determining (S1303) whether a specific region is included in the captured image and, if it is determined that the specific region is included in the captured image,
   determining (S1304) a scanning area for scanning with laser light based on the specific region;
   measuring, using a first measurement unit (721), a distance to respective pixels in the specific region based on a pulsed laser light reflected at the respective pixels in the specific region corresponding to the respective pixels of the captured image by scanning laser light within the scanning area;
   measuring, using a second measurement unit (712), for each pixel included in the captured image, a distance by performing a parallax calculation based on the captured image;
   combining distance information from the first measurement unit (721) and distance information from the second measurement unit (712);
   generating (S1307) ranging information; and
   outputting the ranging information to an external device.

4. A non-transitory computer-readable storage medium storing a program for causing a computer in a ranging system to execute the method according to the preceding claim.

**Patentansprüche**

1. Entfernungsmesssystem (100) zum Messen eines Abstands zu einem Objekt, das auf einem aufgenommenen Bild abgebildet ist, das Folgendes umfasst:

   eine Stereoabbildungseinheit (110), die konfiguriert ist, aufgenommene Bilder abzubilden;
   eine Datenverarbeitungsvorrichtung (130), die konfiguriert ist, Parallaxenberechnungsabstandsinformationen durch Ausführen einer Parallaxenberechnung für die aufgenommenen Bilder zu berechnen, wobei das Entfernungsmesssystem (100) **dadurch gekennzeichnet ist, dass**:

   die Datenverarbeitungsvorrichtung (130) ferner konfiguriert ist, zu bestimmen, ob ein spezifischer Bereich in dem aufgenommenen Bild enthalten ist; und

dann, wenn die Datenverarbeitungsvorrichtung (130) bestimmt, dass der spezifische Bereich in dem aufgenommenen Bild enthalten ist, einen Abtastbereich zum Abtasten mit Laserlicht anhand des spezifischen Bereichs zu bestimmen;

und dadurch, dass es ferner Folgendes umfasst:

eine Laserradarentfernungsmesseinheit (120), die konfiguriert ist, Laserabstandsinformationen anhand eines reflektierten Laserlichts, das den jeweiligen Pixeln des aufgenommen Bildes entspricht, durch Abtasten von Laserlicht innerhalb des Abtastbereichs zu berechnen, wobei die Datenverarbeitungsvorrichtung (130) konfiguriert ist, Entfernungsmessinformationen durch Kombinieren der Parallaxenberechnungsabstandsinformationen und der Laserabstandsinformationen zu erzeugen.

2. Entfernungsmesssystem nach Anspruch 1, wobei die Datenverarbeitungsvorrichtung (130) konfiguriert ist, die Laserabstandsinformationen für jedes der Pixel in dem spezifischen Bereich und die Parallaxenberechnungsabstandsinformationen für jedes der Pixel in einem Bereich, der von dem spezifischen Bereich verschieden ist, zu kombinieren.

3. Datenverarbeitungsverfahren zum Messen eines Abstands zu einem Objekt, das auf einem aufgenommenen Bild abgebildet ist, das Folgendes umfasst:

Ausführen (S1303) eines Abbildungsprozesses und Abbilden eines aufgenommenen Bildes;
Ausführen einer Parallaxenberechnung für das aufgenommene Bild und Berechnen (S1302) von Parallaxenberechnungsabstandsinformationen;
wobei das Datenverarbeitungsverfahren **dadurch gekennzeichnet ist, dass** es ferner die folgenden Schritte umfasst:

Bestimmen (S1303), ob ein spezifischer Bereich in dem aufgenommenen Bild enthalten ist, und dann, wenn bestimmt wird, dass der spezifische Bereich in dem aufgenommenen Bild enthalten ist, Bestimmen (S1304) eines Abtastbereichs zum Abtasten mit Laserlicht anhand des spezifischen Bereichs;
Messen unter Verwendung einer ersten Messeinheit (721) eines Abstands zu jeweiligen Pixeln in dem spezifischen Bereich anhand eines gepulsten Laserlichts, das an den jeweiligen Pixeln in dem spezifischen Bereich reflektiert wird, die den jeweiligen Pixeln des aufgenommenen Bildes entsprechen, durch Abtasten von Laserlicht innerhalb des spezifischen Bereichs;
Messen unter Verwendung einer zweiten Messeinheit (712) für jedes Pixel, das in dem aufgenommenen Bild enthalten ist, eines Abstands durch Ausführen einer Parallaxenberechnung anhand des aufgenommenen Bildes;
Kombinieren von Abstandsinformationen von der ersten Messeinheit (721) und Abstandsinformationen von der zweiten Messeinheit (712);
Erzeugen (S1307) von Entfernungsmessinformationen; und
Ausgeben der Entfernungsmessinformationen an eine externe Vorrichtung.

4. Nicht transitorisches computerlesbares Speichermedium, das ein Programm speichert, das bewirken kann, dass ein Computer in einem Entfernungsmesssystem das Verfahren nach dem vorhergehenden Anspruch ausführt.

**Revendications**

1. Système de télémétrie (100) destiné à mesurer une distance à un objet imagé sur une image capturée, comprenant :

une unité d'imagerie stéréo (110) conçue pour imager des images capturées ;
un dispositif de traitement d'informations (130) conçu pour calculer des informations de distance par calcul de parallaxe par la réalisation d'un calcul de parallaxe pour les images capturées,
ledit système de télémétrie (100) étant **caractérisé en ce que** :

le dispositif de traitement d'informations (130) est en outre conçu pour déterminer si une région spécifique est comprise dans l'image capturée, et

pour déterminer, si le dispositif de traitement d'informations (130) détermine que la région spécifique est comprise dans l'image capturée, une zone de balayage destinée à balayer avec une lumière laser en fonction de la région spécifique ;

et **en ce qu'**il comprend en outre :

une unité de télémétrie de radar à laser (120) conçue pour calculer des informations de distance par laser en fonction d'une lumière laser réfléchie correspondant aux pixels respectifs de l'image capturée par le balayage de la lumière laser dans la zone de balayage,
le dispositif de traitement d'informations (130) étant conçu pour générer des informations de télémétrie par la combinaison des informations de distance par calcul de parallaxe et des informations de distance par laser.

2. Système de télémétrie tel que défini dans la revendication 1, dans lequel le dispositif de traitement d'informations (130) est conçu pour combiner les informations de distance par laser pour chacun des pixels dans la région spécifique et les informations de distance par calcul de parallaxe pour chacun des pixels dans une région autre que la région spécifique.

3. Procédé de traitement d'informations destiné à mesurer une distance à un objet imagé sur une image capturée, comprenant :

la réalisation (S 1303) d'un processus d'imagerie et l'imagerie d'une image capturée ;
la réalisation d'un calcul de parallaxe pour l'image capturée et le calcul (S1302) d'informations de distance par calcul de parallaxe ;
ledit procédé de traitement d'informations étant **caractérisé en ce qu'**il comprend en outre les étapes de :

détermination (S1303) de savoir si une région spécifique est comprise dans l'image capturée et, si l'on détermine que la région spécifique est comprise dans l'image capturée,
détermination (S1304) d'une zone de balayage destinée à balayer avec la lumière laser en fonction de la région spécifique ;
mesure, à l'aide d'une première unité de mesure (721), d'une distance à des pixels respectifs dans la région spécifique en fonction d'une lumière laser à impulsions réfléchie au niveau des pixels respectifs dans la région spécifique correspondant aux pixels respectifs de l'image capturée par le balayage de la lumière laser dans la zone de balayage ;
mesure, à l'aide d'une deuxième unité de mesure (712), pour chaque pixel compris dans l'image capturée, d'une distance par la réalisation d'un calcul de parallaxe en fonction de l'image capturée ;
combinaison d'informations de distance depuis la première unité de mesure (721) et d'informations de distance depuis la deuxième unité de mesure (712) ;
génération (S1307) d'informations de télémétrie ; et
émission des informations de télémétrie vers un dispositif externe.

4. Support de stockage non transitoire lisible par ordinateur stockant un programme destiné à amener un ordinateur dans un système de télémétrie pour effectuer le procédé selon la revendication précédente.

# FIG.1

# FIG.2A

RANGING SYSTEM 100

111 120 112

SCANNABLE AREA WITH LASER LIGHT

HORIZONTAL DIRECTION

CAPTURED AREA

200

ROAD SURFACE

# FIG.2B

200

CAPTURED AREA

VERTICAL DIRECTION

SCANNABLE AREA WITH LASER LIGHT

ROAD SURFACE

# FIG.3

IMAGING UNIT

111, 112

301

303 CMOS UNIT
305 CDS CIRCUIT
307 A/D CON-VERTER
309 IMAGE PROCESSING CIRCUIT

311 TIMING SIGNAL GENERATION UNIT
312 CPU

302

304 CMOS UNIT
306 CDS CIRCUIT
308 A/D CON-VERTER
310 IMAGE PROCESSING CIRCUIT

321 SDRAM
322 COMPRESSION /EXPANSION CIRCUIT
323 MEMORY CARD
324 OPERATION UNIT
325 ROM
326 RAM

EP 2 927 710 B1

FIG.4

EP 2 927 710 B1

16

# FIG.5

LASER
LIGHT

# FIG.6

# FIG.7

INFORMATION PROCESSING DEVICE — 130

RANGING INFORMATION OUTPUT UNIT — 732 → RANGING INFORMATION

SYNTHESIS UNIT — 731

PARALLAX IMAGE CALCULATION UNIT — 712

CAPTURED IMAGE → CAPTURED IMAGE ACQUISITION UNIT — 711

BRIGHTNESS IMAGE INPUT UNIT — 713

REGION SPECIFICATION UNIT — 714

SCANNING AREA DESIGNATION UNIT — 715

SCANNING AREA INFORMATION

LASER DISTANCE INFORMATION → LASER DISTANCE INFORMATION ACQUISITION UNIT — 721

EP 2 927 710 B1

# FIG.8

# FIG.9

REGION SPECIFICATION UNIT ~714

BLOCK SEGMENTATION UNIT ~901

BLOCK BRIGHTNESS AVERAGE VALUE CALCULATION UNIT ~902

POSITION CALCULATION UNIT ~903

DETERMINATION UNIT ~904

SVM DICTIONARY (FOR SNOW) ~906

SVM DICTIONARY (FOR SHADOW) ~907

COMBINATION UNIT ~905

EP 2 927 710 B1

# FIG.10

FIG.11

SKY

SCENERY

ROAD
SURFACE

821

820

1121

1120

FIG.12

| COORDINATES | $x_1,y_1$ | $x_2,y_2$ | $x_3,y_3$ | $x_4,y_4$ | $x_5,y_5$ | |
|---|---|---|---|---|---|---|
| LASER DISTANCE INFORMATION | $L_1$ | $L_2$ | $L_3$ | $L_4$ | $L_5$ | |

EP 2 927 710 B1

# FIG.13

```
          START

PERFORM IMAGING PROCESS          S1301

CALCULATE PARALLAX CALCULATION   S1302
     DISTANCE INFORMATION

              S1303
NO    SPECIFIC REGION IS INCLUDED?
              YES

DETERMINE SCANNING AREA FOR       S1304
  SCANNING WITH LASER LIGHT

      EMIT LASER LIGHT            S1305

     CALCULATE LASER             S1306
    DISTANCE INFORMATION

SYNTHESIZE RANGING INFORMATION
  FROM PARALLAX CALCULATION       S1307
 DISTANCE INFORMATION AND LASER
    DISTANCE INFORMATION

OUTPUT RANGING INFORMATION        S1308

              S1309
      END INSTRUCTION IS INPUT?    NO
              YES

           END
```

FIG.14

COORDINATES

PARALLAX CALCULATION
DISTANCE INFORMATION

1400

COORDINATES

LASER DISTANCE
INFORMATION

1121

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000329852 A
- EP 2669846 A2
- EP 2546602 A1
- JP 2004347471 A
- WO 2013018673 A1